# EUROPEAN PATENT APPLICATION

(11) **EP 2 819 287 A2**
(43) Date of publication of application: **31.12.2014**
(21) Application number: 14157976.3
(22) Date of filing: 05.03.2014
(51) Int. Cl.: H02M 1/32

(54) **Adjustment circuit and electronic device thereof**

(30) Priority: 27.06.2013 CN 201310262186
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Wang, Tao, Shenzhen (CN)
(74) Representative: Towlson, Samantha Jayne

(57) **Abstract**

An electronic device (100) includes a power supply (10), a switching element (30), and an adjustment circuit (20). The power supply (10) provides a working voltage to the adjustment circuit (20). The switching element (30) is capable of generating heat when operating. The adjustment circuit (20) is connected between the power supply (10) and the switching element (30), and includes a detection unit (21) and a control unit (23) which are parallel connected between the power supply (10) and the switching element (30). The detection unit (21) detects the heat generated by the switching element (30) and outputs a detected voltage. The control unit (23) adjusts the duty cycle of the PWM signal based on the detected voltage.

## Description

### BackGround

### Technical Field

The present disclosure relates to an electronic device with an adjustment circuit.

### Description of Related Art

Some electronic devices include at least one high power switching element. When the switching element operates, heat is generated and this increases the temperature inside of the electronic device. However, as the temperature increases, other elements in the electronic device may decrease in performance or even malfunction.

Therefore, there is room for improvement in the art.

### Summary

According to an exemplary embodiment of the invention, an electronic device detects the heat generated by a switching element for adjusting the power of the switching element by an adjustment circuit. The adjustment circuit includes a detection unit and a control unit which are parallel connected between the power supply and the switching element. The control unit generates PWM signal to drive the switching element. The detection unit detects the heat generated by the switching element and outputs a detected voltage to control the control unit to adjust the duty cycle of the PWM signal in real time.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiments. Moreover, in the drawings, like reference numerals designate corresponding parts throughout two views.
FIG. 1 is a block diagram of an embodiment of an electronic device.
FIG. 2 is a circuit diagram of an embodiment of the electronic device of FIG. 1.

### DETAILED DESCRIPTION

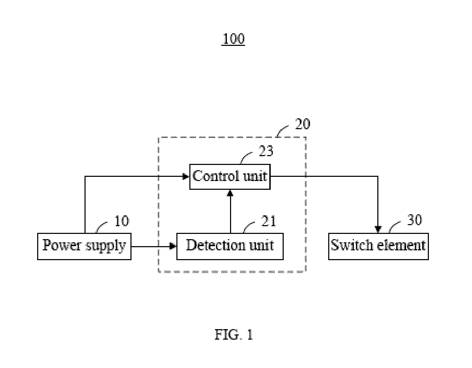

FIG. 1 shows an embodiment of an electronic device 100. The electronic device 100 includes at least one high power switching element 30. The electronic device 100 detects a heat generated by the operated switching element 30 to automatically adjust the power of the switching element 30 to prevent a temperature inside of the electronic device 100 from being too high. In one embodiment, the electronic device 100 can be a computer, an air conditioner, or a television.

The electronic device 100 further includes a power supply 10 and an adjustment circuit 20.

The power supply 10 provides a working voltage to the adjustment circuit 20. In the embodiment, the working voltage is 5 volt (V).

The adjustment circuit 20 connects between the power supply 10 and the switching element 30. The adjustment circuit 20 generates a pulse width modulation (PWM) signal to drive the switching element 30. The adjustment circuit 20 further detects the heat generated by the switching element 30 to adjust the duty cycle of the PWM signal. The adjustment circuit 20 includes a detection unit 21 and a control unit 23.

The detection unit 21 detects the heat generated by the switching element 30 and outputs a detected voltage to the control unit 23. The detected voltage is changed in a linear manner. In one embodiment, for each one degree of the temperature increase, the detected voltage detected by the detection unit 21 decreases 2-2.5 millivolt (mV).

The control unit 23 generates a variable duty cycle of the PWM signal to drive the switching element 30 based on the detected voltage. The PWM signal includes a logic-low signal and a logic-high signal. In one duty cycle, the logic-low signal lasts for a first duration, and the logic-high signal lasts for a second duration. The ratio between the first duration and the second duration is constant in each variable duty cycles of the PWM signal.

The switching element 30 operates based on the PWM signal and the heat generated by the switch element 30 can be controlled.

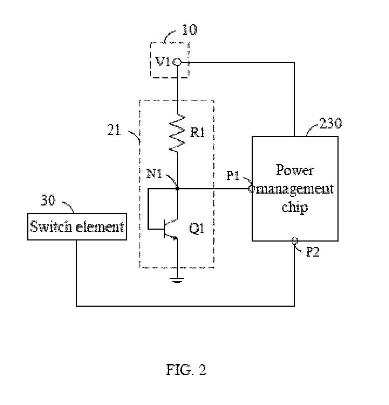

FIG. 2 shows that the power supply 10 includes a power source V1.

The detection unit 21 includes a transistor Q1 and a first resistor R1. A base of the transistor Q1 is connected to the power source V1 through the resistor R1. An emitter of the transistor Q1 is grounded. A collector of the transistor Q1 is connected to the base of the transistor Q1. A turned-on voltage of the transistor Q1 is variably changed by the temperature. When the voltage difference between the base and the emitter exceeds the turned-on voltage, the transistor Q1 turns on. In one embodiment, the transistor Q1 is an npn type bipolar junction transistor.

The control unit 23 includes a power management chip 230. The power management chip 230 includes an adjusting pin P1 and an output pin P2. The adjusting pin P1 is connected to the base of the transistor Q1. The output pin P2 is connected to the switching element 30.

A working method of the electronic device 100 is described as follows. When the power supply 10 outputs the working voltage, the voltage difference between the base and the emitter of the transistor Q1 is more than the turned-on voltage, the transistor Q1 turns on. The voltage of the detecting pin P1 is equal to the turned-on voltage of the transistor Q1. The power management chip 230 outputs the PWM signal based on the voltage of the detecting pin P1 to control the power of the switching element 30. The switching element 30 operates and generates heat. When the heat generated by the switching element 30 is increased, the turned-on voltage of the transistor Q1 decreases. The voltage of the detecting pin P1 is decreased, the power management chip 230 decreases the power of the PWM signal to decrease the heat generated by the switching element 30.

In use, the power of the switching element 30 is automatically adjusted based on the heat generated by the switching element 30, such that the temperature of the electronic device 100 is being controlled, and the performance of the electronic device 100 is improved.

It is to be understood, however, that even though information and advantages of the present embodiments have been set forth in the foregoing description, together with details of the structures and functions of the present embodiments, the disclosure is illustrative only; and changes may be made in detail, especially in the matters of shape, size, and arrangement of parts within the principles of the present embodiments to the full extent indicated by the broad general meaning of the terms in which the appended claims are expressed.

## Claims

1. An electronic device, comprising:
a power supply for providing a working voltage;
a switching element capable of generating heat when operating;
an adjustment circuit connected between the power supply and the switching element, capable of generating a pulse width modulation (PWM) signal to drive the switching element to work;
wherein the adjustment circuit powered by the working voltage comprises a detection unit and a control unit which are connected between the power supply and the switching element; the detection unit detects the heat generated by the switching element and outputs a detected voltage; the control unit adjusts the duty cycle of the PWM signal based on the detected voltage.

2. The electronic device of claim 1, wherein the PWM signal includes a logic-low signal and a logic-high signal; the logic-low signal lasts for a first duration in one duty cycle, and the logic-high signal lasts for a second duration in one duty cycle; the ratio between the first duration and the second duration is constant in different duty cycles.

3. The electronic device of claim 1 or 2, wherein for each one degree of the temperature increase, the detected voltage detected by the detection unit decreases 2-2.5 millivolt (mV).

4. The electronic device of claim 1, 2, or 3, wherein the detected voltage is changed in a linear manner.

5. The electronic device of claim 1, 2, 3, or 4, wherein the detection unit includes a transistor and a first resistor; a base of the transistor is connected to the power supply through the resistor; an emitter of the transistor is grounded; a collector of the transistor is connected to the base of the transistor, a turned-on voltage of the transistor is variable changed by the fluctuation in temperature.

6. The electronic device of claim 5, wherein the transistor is an npn type bipolar junction transistor.

7. An adjustment circuit connected between a power supply and a switching element which generates heat when operates; the power supply generating a working voltage; the adjustment circuit comprising:
a detection unit powered by the working voltage; and
a control unit powered by the working voltage, for generating a pulse width modulation (PWM) signal to drive the switching element to work;
wherein the detection unit and the control unit are connected between the power supply and the switching element; the detection unit detects the heat generated by the switching element and outputs a detected voltage; the control unit adjusts the duty cycle of the PWM signal based on the detected voltage.

8. The electronic device of claim 7, wherein the PWM signal includes a logic-low signal and a logic-high signal; the logic-low signal lasts for a first duration in one duty cycle, and the logic-high signal lasts for a second duration in one duty cycle; the ratio between the first duration and the second duration is constant in different duty cycles.

9. The electronic device of claim 7 or 8, wherein for each one degree of the temperature increase, the detected voltage detected by the detection unit decreases 2-2.5 millivolt (mV).

10. The electronic device of claim 7, 8, or 9, wherein the detected voltage is changed in a linear manner.

11. The electronic device of claim 7, 8, 9, or 10, wherein the detection unit includes a transistor and a first resistor; a base of the transistor is connected to the power supply through the resistor; an emitter of the transistor is grounded; a collector of the transistor is connected to the base of the transistor, a turned-on voltage of the transistor is variable changed by the fluctuation in temperature.

12. The electronic device of claim 11, wherein the transistor is an npn type bipolar junction transistor.
